# EUROPEAN PATENT APPLICATION

(11) **EP 2 333 396 A1**
(43) Date of publication of application: **15.06.2011**
(21) Application number: 10192431.4
(22) Date of filing: 24.11.2010
(51) Int. Cl.: F16N 7/30, F16N 7/32, F16N 7/38, F16N 25/02

(54) **Minimal lubrication device**

(30) Priority: 26.11.2009 IT MI20092084; 06.08.2010 IT MI20101520
(71) Applicant: DROPSA S.p.A., 20122 Milano (IT)
(72) Inventor: Divisi, Walter, 98000 Monaco (MC)
(74) Representative: Vanosi, Adelio Valeriano

(57) **Abstract**

A minimal lubrication device comprising a storage reservoir for a lubricant fluid means to pressurize the said lubricant and means to feed the lubricant in pressure to at least a modular element, the modular element comprising a lubricating conduit (90) intercepted by a flow regulator (84) and a compressed air conduit (810), the lubricating conduit and the compressed air conduit being coupled with a air-lubricant mixing element (88). On the compressed air conduit upstream to the mixing element a vortex tube is provide, to cool down the temperature of the air flow to which mix said lubricant.

## Description

The present invention relates to a minimal air/oil lubrication device.
More particularly, it relates to a modular device.
Air/oil lubrication represents a relatively recent reality, and is the result of the introduction of advanced technologies which have enabled it to be applied mainly in the field of dry machining. It has also replaced traditional spray systems because of their negative environmental impact. Essentially, the lubrication takes place by feeding a continuous air flow which provides not only a transport means for the oil as far as the lubrication point, but also a cooling means for those members to be lubricated and for the lubrication system.

The oil, injected into the air flow at regular intervals, covers the surfaces to be lubricated, so reducing friction and wear.

The known devices provides the mixture of air and oil in pressure at a temperature that is too high to both lubricate and cool down the working zone.

An object of the present invention is therefore to provide an air/oil lubrication device which represents an improvement over the known art, the device being able to provide to the lubricating zone an air-oil mixture flow with a controlled temperature, that can also cool down the temperature of the working zone.

These and other objects are attained by an air/oil lubrication device in accordance with the teachings of the accompanying claims.

Further characteristics and advantages of the invention will be more apparent from the description of a preferred but non-exclusive embodiment of the air/oil lubrication device, illustrated by way of nonlimiting example in the accompanying drawings, in which:
Figures 1, 2 and 3 are respectively a front, side and rear view of the device of the present invention;
Figure 4 is an exploded view of a modular oil/air mixer element of the present invention;
Figure 5 shows a schematic circuit of the modular mixer element.

With reference to said figures, these show an air/oil lubrication device indicated overall by the reference numeral 1.

It comprises a lubricant fluid storage reservoir 2 supported by a plate 3 to which the device is fixed. The reservoir comprises an element (for example of float type) for sensing the fluid level within it, and a filter 5 associated with an aperture 6 for feeding lubricant into the reservoir. The fixing plate 3 comprises a conduit connecting one end of the reservoir to the suction port of a (preferably high pressure) pump 6 fixed below the plate.

The conduit feeds lubricant fluid from the reservoir 2 to the suction port 7. The pump 6 comprises a first hydraulic block 6A for pumping the fluid via a cylinder 9, and a second pneumatic block 6B for operating the cylinder 9.

The pump delivers oil with a pressure between 10 and 100 bar to the delivery line 18.

In an alternative embodiment the pump is not present and the delivery line 18 is fed directly form an exit of the reservoir containing the lubricant pressurized through known pneumatic systems.

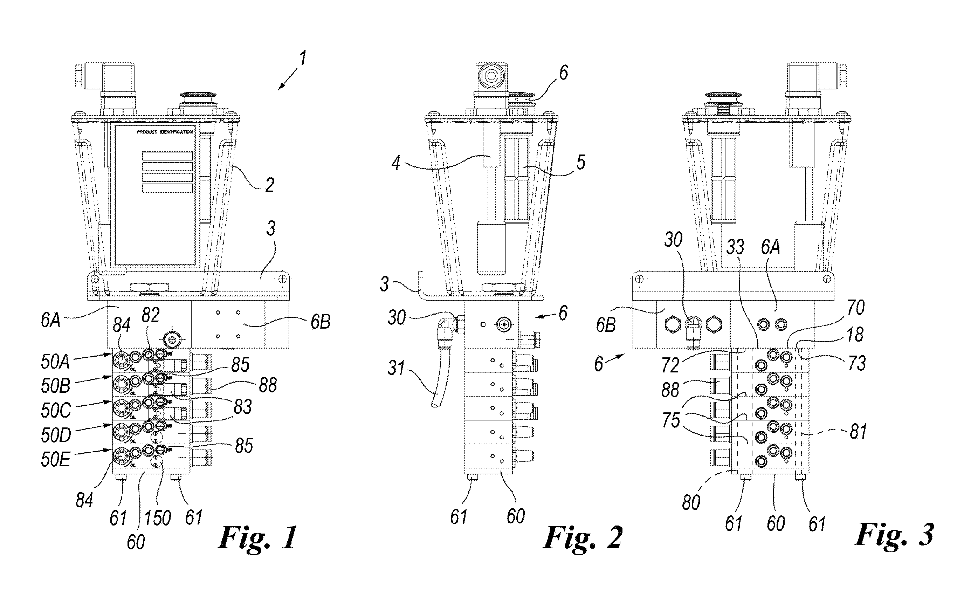

Below the pump a series of modular elements 50A, B, C, D, E are mounted resting one on another (fig 1) and fixed together and to the pump (if present) by a pair of through screws 61 housed in fixing holes provided through each modular element and at the pump.

The pump has a surface 70 provided with a hole 18 communicating with a delivery port of the pump and a hole 33 communicating with the compressed air feed 31.

Each modular element (Figure 6) has a first passage 72 with its axis coinciding with the axis of the pump hole 33 and a second passage 73 with its axis coinciding with the axis of the pump hole 18. The passages 72 and 73 are through-holes opening into both the surfaces 74 and 75 of the modular element.

When several modular elements are fixed to the pump as in Figure 3, the passages 72 and 73 of each modular element define a pressurized main oil conduit 81 and a compressed air main conduit 80 connected respectively to the delivery port of the pump 6 and to a compressed air source or feed 31.

Each modular element 50 draws from these main conduits the compressed air and pressurized oil required for its operation.

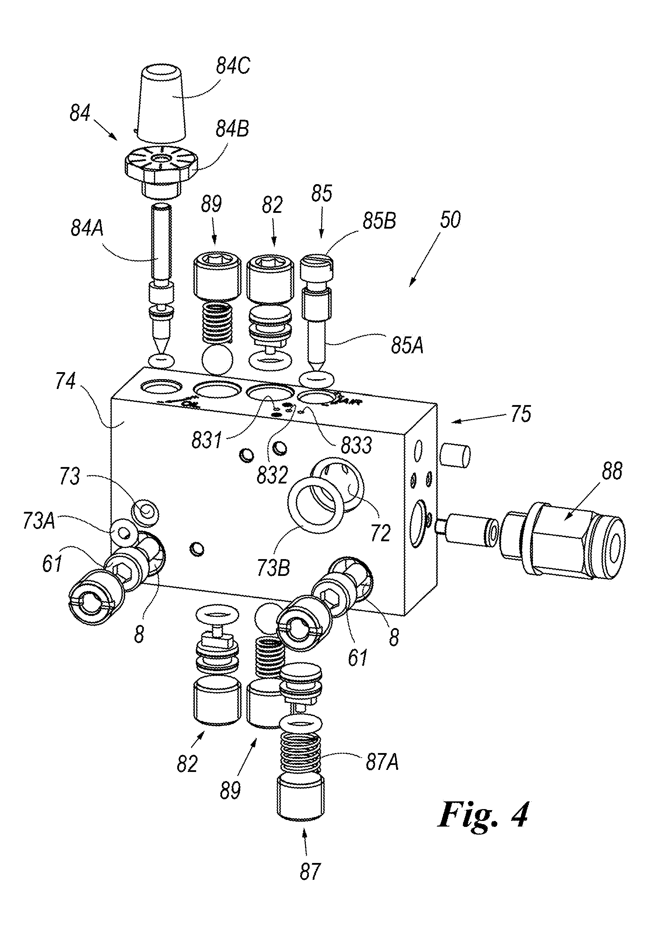

In particular, the schematic circuit of each modular element 50 is shown in Figure 4. From this it can be seen that the lubricant delivered by the pump 6 (or from the reservoir in pressure) passes through the conduit 81 to the flow regulator 84 which regulates the entering oil quantity. The flow regulator 84 has a needle valving element 84A on which a graduated scale 84B and an operating knob 84C are mounted. The outlet line 90 from the flow regulator 84 opens towards a mixing element 88. The mixing element can be directly integrated in the module or can be located in a distant position from the module. The line 84 is intercepted by a shut-off element which, in the example, is a pilot piston 82 coupled to a spring-loaded valve 89 controlled by a solenoid valve 83. The conduit 90 also presents a branch connecting it to an anti-drip piston 87 further connected to the compressed air feed.

When air is present in the conduit 80, the piston 87 takes the position shown by the arrow F (opposite to that illustrated, with the spring 87A compressed). When the conduit 80 is without pressure the spring 87A is extended and the piston returns to the illustrated position to draw the lubricant present in the conduit 90 into a chamber 87B.

The conduit 80 communicates via the passage 72 with an air flow adjustment cock 85, the outlet of which opens into the mixing element 88 via a conduit 810. The cock 85 also presents a needle valving element 85A having a head 85B enabling it to be operated.

As in the preceding case, the conduit 810 is intercepted by a further pilot piston 82 with a spring-loaded valve 89 also controlled by the solenoid valve 83.

The entry conduit 831 of the solenoid valve 83 (optional, and not present for example in the elements 50D. 50E) communicates with the compressed air conduit 80. It is able to connect a conduit 832 controlling the pilot pistons 82 to a discharge line 833 (pistons 2 open and lines 86 and 810 operative), or to the entry conduit 831 (pistons 2 closed and lines 86 and 810 inoperative).

The mixing element 88 is essentially a nozzle which can be provided directly on each module 50 or integrated in each module 50 (Figure 4), or can be connected to the respective module via suitable air and lubricant pipes T which bring it directly in proximity to the point at which lubrication is required. In the first case a single air/oil pipe is sufficient, extending from the module to the position of use.

In concluding the device description it should be noted that if the solenoid valve 83 is absent, the holes provided in each modular element 50 which derive from the conduits 831, 832 and 833 are closed by a plate 150. In that case the pilot pistons 82 are always in a position such as to enable fluids to pass into the conduits 90 and 810.

In addition the air cock 85 could also not be provided. Each module could then be fed by a different air source, the conduit 80 hence being absent. The device operation is apparent to the expert of the art from the aforegoing description, and is as follows.

The pump 6 pressurizes the lubricant fluid (for example oil) withdrawn from the reservoir 2. The pump is operated by compressed air which is provided by the compressed air source 31. It feeds both air and oil to each of the modules 50 fixed to it in series, via the main conduits 80 and 81 formed by passages provided directly within each of the modules and coupled together by means of gaskets 73A, 73B. The various modules are fixed together by screws 61 passing through suitable holes 8 provided in each module.

In a different embodiment the modules can be feed with the lubricant in pressure coming directly from the pressurized reservoir. In this case the reservoir containing the lubricant is pressurized in a known manner, for example by a pneumatic pressurization system.

Each module provides for mixing a fluid quantity adjustable by the flow regulator 84. The air quantity delivered by each module can also be adjusted, by means of the cock 85.

In this manner a precise adjustment of the oil quantity delivered by each modular element 50 is achieved and, by means of a possible stroke counter for the piston 9 of the pump 6, the oil quantity fed to the group of modular elements or to each individually tested element can be monitored during tests. In this respect, at a stage prior to the use of the device one modular element 50 could be activated at a time and the delivered oil quantity (measured by a piston stroke counter) could be regulated. In this manner a precise adjustment of the oil quantity delivered by each element can be achieved, so combining the advantages of a positive displacement pumping system with those of a pressurized reservoir system.

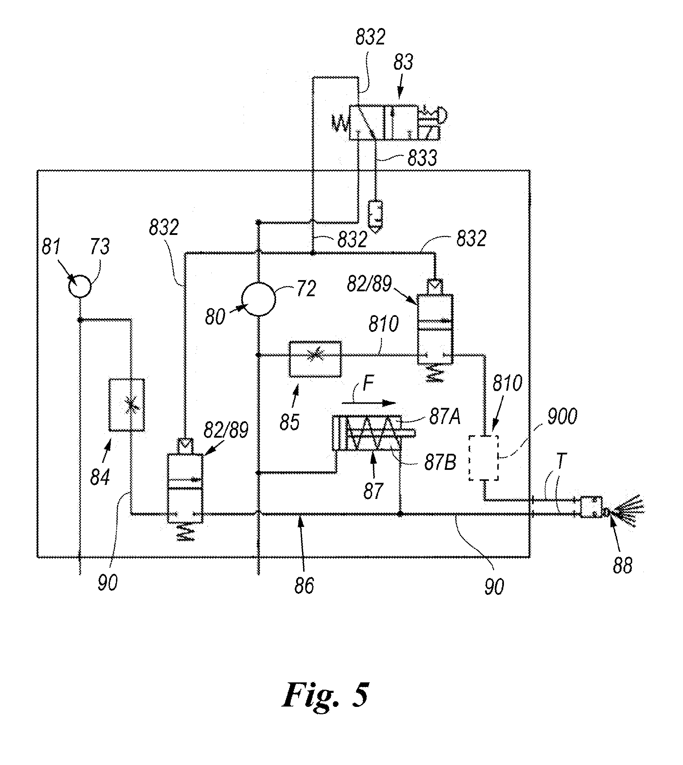

According to the present invention, a vortex tube 900 is provided in the conduit 810 of each module (Figure 5) to regulate the temperature of the air fed to the nozzle 88. The vortex tube is housed in the module or directly realized in it. In this manner, the temperature of the air fed to the nozzle 88 can be regulated by a suitable regulator screw. This enables a valid cooling effect to be achieved in addition to lubrication.

## Claims

1. A minimal lubrication device comprising a storage reservoir for a lubricant fluid means to pressurize the said lubricant and means to feed the lubricant in pressure to at least a modular element, the modular element comprising a lubricating conduit (90) intercepted by a flow regulator (84) and a compressed air conduit (810), the lubricating conduit and the compressed air conduit being coupled with an air-lubricant mixing element (88), **characterised in that** on the compressed air conduit positioned upstream the mixing element a vortex tube is provided, to cool down the temperature of the air flow at which said lubricant is mixed.

2. A device as claimed in the preceding claim, wherein the vortex tube is integrated in the module.

3. A device as claimed in claim 1, wherein the mixing element is integrated in the module.

4. A device as claimed in the preceding claim, wherein the flow regulator is a needle flow regulator.

5. A device as claimed in one or more of the preceding claims, wherein said means to pressurize the lubricant comprise an high pressure pump and or pneumatic pressurization means of the reservoir.

6. A device as claimed in one or more of the preceding claims, wherein said modular element comprises a solenoid valve controlling a shut-off device for the oil flow and/or the air flow directed to said mixer element.

7. A device as claimed in one or more of the preceding claims, wherein said modular element presents a cock for adjusting the air flow fed into said mixer element.

8. A device as claimed in the preceding claim, wherein said modular element presents an anti-drip element adapted to store the oil if compressed air is absent.

9. A device as claimed in one or more of the preceding claims, wherein said modular element comprises fixing means enabling it to be fixed to other identical modular elements and/or to said high pressure pump.

10. A device as claimed in one or more of the preceding claims, wherein several modules fixed together define a pressurized main oil conduit (81) and/or a main compressed air conduit (80) connected respectively to the pump delivery port or to the pressurized reservoir, and to a compressed air source, each module drawing compressed air and pressurized lubricant from said conduits.
